(19)

**Europäisches Patentamt**
**European Patent Office**
**Office européen des brevets**

(11) **EP 4 647 732 A1**

(12) **EUROPEAN PATENT APPLICATION**

(43) Date of publication:
**12.11.2025 Bulletin 2025/46**

(21) Application number: **24174592.6**

(22) Date of filing: **07.05.2024**

(51) International Patent Classification (IPC):
**G01H 9/00** (2006.01)     **G01D 5/353** (2006.01)
**G01K 11/32** (2021.01)

(52) Cooperative Patent Classification (CPC):
**G01H 9/004; G01D 5/35358; G01K 11/32**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Alcatel Submarine Networks**
**91940 Les Ulis (FR)**

(72) Inventor: **Ronnekleiv, Erlend**
**7052 Trondheim (NO)**

(74) Representative: **Loyer & Abello**
**9, rue Anatole de la Forge**
**75017 Paris (FR)**

(54) **APPARATUS FOR PROCESSING DATA ASSOCIATED WITH AN OPTICAL FIBER**

(57)    An apparatus for processing data associated with an optical fiber, the apparatus comprising at least one processor, and at least one memory storing instructions that, when executed by the at least one processor, cause the apparatus to: perform a plurality of measurements applying a distributed acoustic sensing technique to the optical fiber to obtain a plurality of measurement signals, each of the plurality of measurements using a different optical frequency and a single spatial fiber mode of the optical fiber, determine at least one measurand of a plurality of measurands associated with the optical fiber based on the plurality of measurement signals.

**Fig. 2**

**Description**

**Field of the Disclosure**

The disclosure relates to an apparatus for processing data associated with an optical fiber.

**Background**

Distributed Acoustic Sensing (DAS) is a technology that uses optical fibers as sensors, e.g., to detect vibrations. By analyzing a backscatter of light pulses sent through the optical fiber, a DAS system can identify changes in an environment of an optical fiber caused by at least one of sound, e.g., pressure, or strain, or temperature variations along the fiber's length.

**Summary**

Various example embodiments of the disclosure are set out by the independent claims. The example embodiments and features, if any, described in this specification, that do not fall under the scope of the independent claims, are to be interpreted as examples useful for understanding various example embodiments of the disclosure.

Some example embodiments relate to an apparatus for processing data associated with an optical fiber, the apparatus comprising at least one processor, and at least one memory storing instructions that, when executed by the at least one processor, cause the apparatus to: perform a plurality of measurements applying a distributed acoustic sensing, DAS, technique to the optical fiber to obtain a plurality of measurement signals, each of the plurality of measurements using a different optical frequency and a single spatial fiber mode of the optical fiber, determine at least one measurand of a plurality of measurands associated with the optical fiber based on the plurality of measurement signals. In some examples, this allows for a discrimination of multiple measurands from one another.

In some examples, at least some, e.g., all, measurements of the plurality of measurements use a same spatial fiber mode of the optical fiber.

In some examples, the DAS technique comprises spatially or delay resolved measurement of changes in a delay or phase, or optical frequency detuning, of an optical backscattering response as may be obtained from the optical fiber.

In some examples, backscattering may result from elastic scatterers in the optical fiber, such as, e.g., at least one of Rayleigh scattering, or fiber Bragg gratings, or other discrete reflectors. In other words, in some examples, DAS measurements may use a response from elastic scatterers, e.g. scattering without shift in the optical frequency at the scattering point. Thus, in some examples, the instructions, when executed by the at least one processor, cause the apparatus to: perform a plurality of measurements, e.g., DAS measurements, based on elastic backscattering.

In some examples, backscattering may result from inelastic scattering, such as, e.g., at least one of Raman based distributed temperature sensing (DTS) or Brillouin based distributed sensing (e.g. BOTDR).

In some examples, a first measurand of the plurality of measurands is one of the following elements: a) temperature, or b) strain, or c) pressure, or d) another measurand that modulates a fiber strain and/or refractive index of the optical fiber, and a second measurand of the plurality of measurands is another one of these elements: a) temperature, or b) strain, or c) pressure, or d) another measurand that modulates a fiber strain and/or refractive index of the optical fiber.

In some examples, the instructions, when executed by the at least one processor, cause the apparatus to discriminate at least two measurands of the plurality of measurands associated with the optical fiber based on the plurality of measurement signals.

In some examples, discriminating at least two measurands comprises minimizing cross sensitivity errors between the at least two measurands.

As an example, in some conventional DAS approaches, a DAS measurement signal as obtained by such conventional approaches comprises information on a change of a refractive index of an optical fiber, wherein, for example, the change of the refractive index depends on, e.g., comprises a non-vanishing sensitivity with respect to, at least one of: a) strain (e.g., mechanical strain), or b) temperature, or c) pressure. In some conventional approaches, these different influences cannot be discriminated.

In some examples, however, using the principle according to the disclosure, which is, inter alia, based on using a plurality of measurements using respective different optical frequencies, two or more of the different measurands such as, e.g., strain, temperature, pressure may be discriminated.

In some examples, discriminating the at least two measurands comprises exploiting a difference in an optical frequency dependence of respective sensitivities associated with the at least two measurands. In some examples, the discrimination of the at least two measurands is based on a difference in a ratio of sensitivities to the different physical parameters, e.g., measurands, e.g., between the different optical frequencies.

In some examples, the instructions, when executed by the at least one processor, cause the apparatus to: apply a plurality of interrogation signals at the different optical frequencies to the optical fiber (e.g., transmit the plurality of interrogation signals via the optical fiber), determine the plurality of measurement signals in response to applying the plurality of interrogation signals to the optical fiber by receiving signals from the optical fiber at the different optical frequencies and by demodulating the signals received from the optical fiber at the different optical frequencies to obtain the plurality of measurement signals.

In some examples, the received signals may be wavelength de-multiplexed, e.g., prior to demodulating.

In some examples, the measurements signals are backscattered received and demodulated signal portions of the interrogation signals, wherein the backscattered signal portions comprise information on at least one of the plurality of measurands. In some examples, the demodulation may comprise at least one of filtering, e.g., matched filtering, or phase extraction or phase differentiation, thus, e.g., providing measurement signals that have welldefined sensitivity values. The resulting measurement signals are suitable for discrimination, e.g., through multiplication, e.g. with an inverse sensitivity matrix, as explained further below.

In other words, in some examples, a distributed coupling between a single forward propagating mode and a single backward propagating mode (e.g., caused by backscattering) is used to obtain the plurality of measurement signals. In other words, in some examples, a bidirectional transmission channel is used, wherein the interrogation signals are applied to a first end section of the optical fiber, and wherein the plurality of measurement signals is/are received at the first end section of the optical fiber. Thus, in some examples, one or more optical sources for providing the interrogation signals may be arranged at the first end section of the optical fiber, and one or more detectors for receiving the plurality of measurement signals are also arranged at the first end section of the optical fiber.

In some examples, the instructions, when executed by the at least one processor, cause the apparatus to: optionally, determine whether the optical fiber is associated with, e.g., forms part of, a subsea cable, neglect temperature changes above a predetermined threshold frequency based on the determination. In other words, in some examples, e.g., a-priori knowledge, e.g., about an environment the optical fiber is located in, may be employed, e.g., for discriminating at least one measurand, e.g., at least with respect to comparatively high frequency components of the at least one measurand.

In some examples, the instructions, when executed by the at least one processor, cause the apparatus to perform at least one of: a) express the plurality of measurement signals as a measurement vector that can be obtained by or expressed as a multiplication of a sensitivity matrix characterizing respective sensitivities of e.g. K many measurements obtained by DAS measurements at the different optical frequencies to K many measurands constituting elements in a measurand vector, or b) estimate a or the measurand vector characterizing K many measurands based on a multiplication of an inverse of a or the sensitivity matrix characterizing respective sensitivities of K many measurands for the different optical frequencies with a measurement vector characterizing the plurality of measurement signals.

In some examples, the instructions, when executed by the at least one processor, cause the apparatus to: perform two measurements applying the distributed acoustic sensing, DAS, technique to the optical fiber to obtain two measurement signals, each of the two measurements using a different optical frequency and a single spatial fiber mode of the optical fiber, determine a strain, as a first measurand, and a temperature, as a second measurand associated with the optical fiber based on the two measurement signals.

In some examples, the multiple of measurands may, e.g., be at least one of: a) temperature and pressure, or b) temperature, strain, and pressure, or c) one or more other measurands that modulate a fiber strain and/or refractive index, e.g., together with either temperature or pressure, or d) one or more other measurands that modulate the fiber strain and/or the refractive index of the optical fiber.

In some examples, the instructions, when executed by the at least one processor, cause the apparatus to: determine a sensitivity of the at least one measurand at at least two optical frequencies, and determine the at least one measurand, e.g., using a multiple of DAS measurements, e.g., at a multiple of different optical frequencies (e.g., optical center frequencies), based on the determined sensitivity.

In some examples, a linearization with respect to a predetermined optical reference frequency may be used.

In some examples, the instructions, when executed by the at least one processor, cause the apparatus to: use, for a first measurement of the plurality of measurements, a first optical frequency associated with a first optical frequency band, use, for a second measurement of the plurality of measurements, a second optical frequency associated with the first, e.g., same, optical frequency band. In some examples, the first optical frequency band is the C-band or the L-band. In other words, in some examples, at least two measurements may use different frequencies within a same optical band, such as, e.g., the L-band or the C-band or another optical band.

In some examples, the instructions, when executed by the at least one processor, cause the apparatus to: use, for a first measurement of the plurality of measurements, a first optical frequency associated with the C-band, use for a second measurement of the plurality of measurements, a second optical frequency associated with the L-band.

Some examples relate to an apparatus for processing data associated with at least one optical fiber, the apparatus comprising means for: performing a plurality of measurements applying a distributed acoustic sensing, DAS, technique to the optical fiber to obtain a plurality of measurement signals, each of the plurality of measurements using a different optical frequency and a single spatial fiber mode of the optical fiber, determining at least one measurand of a plurality of measurands associated with the optical fiber based on the plurality of measurement signals.

In some examples, the means for performing the plurality of measurements and determining the at least one measurand may, e.g., comprise at least one processor, and at least one memory storing instructions that, when executed by the at least one processor, cause the apparatus to perform at least one of the aforementioned aspects of performing the plurality of measurements and determining the at least one measurand.

In some examples, the means for performing the plurality of measurements and determining the at least one measurand may, e.g., comprise circuitry configured to perform at least one of the aforementioned aspects of performing the plurality of measurements and determining the at least one measurand.

Some examples relate to a system comprising at least one apparatus according to the disclosure.

Some examples relate to a method, e.g., a computer-implemented method, for processing data associated with at least one optical fiber, comprising: performing a plurality of measurements applying a distributed acoustic sensing, DAS, technique to the optical fiber to obtain a plurality of measurement signals, each of the plurality of measurements using a different optical frequency and a single spatial fiber mode of the optical fiber, determining at least one measurand of a plurality of measurands associated with the optical fiber based on the plurality of measurement signals.

Some examples relate to a computer program comprising instructions which, when executed by an apparatus, cause the apparatus to perform the method according to the disclosure.

Some examples relate to a computer-readable storage medium, for example a non-transitory computer-readable storage medium, comprising the computer program according to the disclosure.

Some examples relate to a data carrier signal carrying and/or characterizing the computer program according to the disclosure.

**Brief Description of the Figures**

Fig. 1A      shows a simplified block diagram according to some examples,

Fig. 1B      shows a simplified block diagram according to some examples,

Fig. 2       shows a simplified block diagram according to some examples,

Fig. 3       shows a simplified flow chart according to some examples,

Fig. 4       shows a simplified flow chart according to some examples,

Fig. 5       shows a simplified flow chart according to some examples,

Fig. 6       shows a simplified flow chart according to some examples,

Fig. 7       shows a simplified flow chart according to some examples,

Fig. 8       shows a simplified flow chart according to some examples,

Fig. 9       shows a simplified flow chart according to some examples,

Fig. 10      shows a simplified block diagram according to some examples.

**Description of some Example Embodiments**

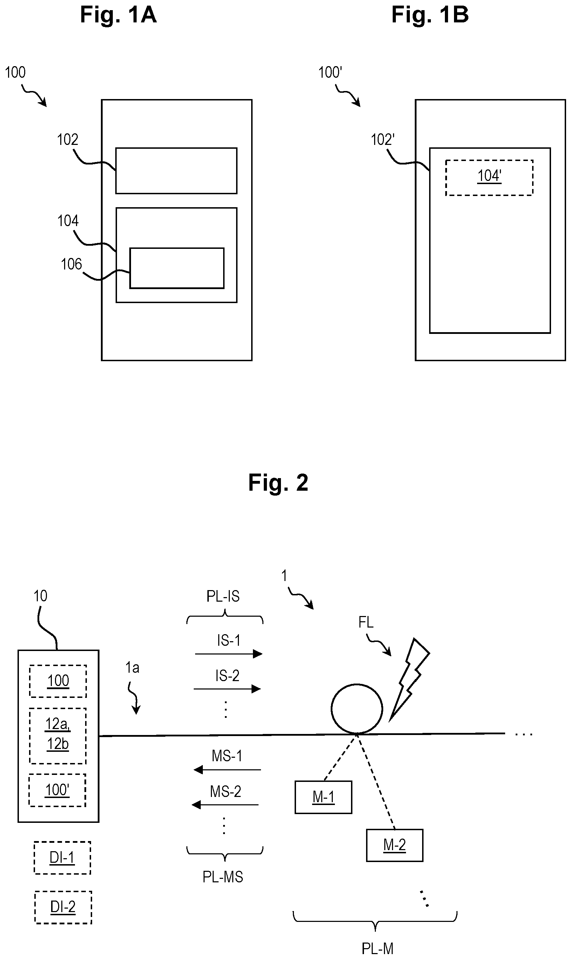

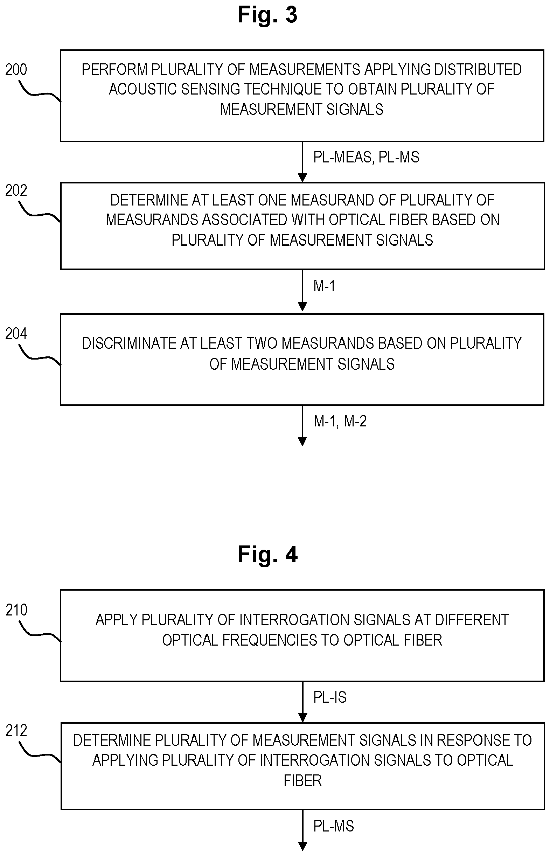

Some example embodiments, see Fig. 1A, 2, 3, relate to an apparatus 100 for processing data associated with an optical fiber 1 (Fig. 2), the apparatus 100 comprising at least one processor 102, and at least one memory 104 storing instructions 106 that, when executed by the at least one processor 102, cause the apparatus 100 to: perform 200 (Fig. 3) a plurality PL-MEAS of measurements applying a distributed acoustic sensing, DAS, technique to the optical fiber 1 to obtain a plurality PL-MS of measurement signals MS-1, MS-2, ..., each of the plurality of measurements using a different optical frequency and a single spatial fiber mode of the optical fiber 1, determine 202 at least one measurand M-1 of a plurality PL-M of measurands M-1, M-2, ... associated with the optical fiber 1 based on the plurality PL-MS of measurement signals

MS-1, MS-2, .... In some examples, this allows for a discrimination of multiple measurands M-1, M-2, ... from one another.

In some examples, at least some, e.g., all, measurements of the plurality PL-MEAS of measurements use a same spatial fiber mode of the optical fiber 1.

In some examples, Fig. 2, a first measurand M-1 of the plurality PL-M of measurands is one of the following elements: a) temperature, or b) strain, or c) pressure, or d) another measurand that modulates a fiber strain and/or a refractive index of the optical fiber 1, and a second measurand M-2 of the plurality of measurands is another one of these elements: a) temperature, or b) strain, or c) pressure, or d) another measurand that modulates a fiber strain and/or a refractive index of the optical fiber 1. In this regard, the flash symbol FL of Fig. 2 symbolizes an effect of such at least one measurand on the optical fiber 1.

In some examples, Fig. 3, the instructions 106, when executed by the at least one processor 102, cause the apparatus 100 to discriminate 204 at least two measurands M-1, M-2 of the plurality PL-M of measurands associated with the optical fiber 1 based on the plurality PL-MS of measurement signals.

As an example, in some conventional DAS approaches, a DAS measurement signal as obtained by such conventional approaches comprises information on a change of a refractive index of an optical fiber, wherein, for example, the change of the refractive index depends on, e.g., comprises a non-vanishing sensitivity with respect to, at least one of: a) strain (e.g., mechanical strain), or b) temperature, or c) pressure. In some conventional approaches, these different influences cannot be discriminated. In other words, based on a measurement signal of a conventional approach, it cannot be determined whether and/or to which extent a measurement signal has been influenced, e.g., by a first measurand, such as, e.g., strain, or whether and/or to which extent the same measurement signal has been influenced, e.g., by a second measurand, such as, e.g., pressure.

In some examples, Fig. 2, however, using the principle according to the disclosure, which is, inter alia, based on using the plurality of measurements using respective different optical frequencies, two or more of the different measurands M-1, M-2, ... such as, e.g., strain, temperature, pressure may be discriminated. In other words, in some examples, more precise insights related to one or more measurands affecting the optical fiber 1 may be obtained, e.g., as compared to some conventional approaches.

In some examples, Fig. 3, discriminating 204 the at least two measurands M-1, M-2 comprises exploiting a difference in an optical frequency dependence of respective sensitivities associated with the at least two measurands M-1, M-2. In some examples, the discrimination 204 of the at least two measurands M-1, M-2 is based on a difference in a ratio of sensitivities to the different physical parameters, e.g., measurands, e.g., between the different optical frequencies.

In some examples, Fig. 4, the instructions 106, when executed by the at least one processor 102, cause the apparatus 100 to: apply 210 a plurality PL-IS of interrogation signals IS-1, IS-2, ... (Fig. 2) at the different optical frequencies to the optical fiber 1 (e.g., transmit the plurality PL-IS of interrogation signals IS-1, IS-2, ... via the optical fiber 1), determine 212 the plurality PL-MS of measurement signals MS-1, MS-2, ... in response to applying 210 the plurality PL-IS of interrogation signals to the optical fiber 1 by receiving signals from the optical fiber 1 at the different optical frequencies and by demodulating the signals received from the optical fiber at the different optical frequencies to obtain the plurality PL-MS of measurement signals.

In some examples, the received signals may be wavelength de-multiplexed, e.g., prior to demodulating.

In some examples, the blocks 210, 212 of Fig. 4 may, e.g., form part of performing the plurality of measurements of block 200 of Fig. 3.

In some examples, Fig. 2, the measurements signals MS-1, MS-2, ... originate from DAS demodulation of backscattered signal portions of the respective interrogation signals IS-1, IS-2, ..., wherein the backscattered signal portions comprise information on at least one of the plurality of measurands.

In other words, in some examples, Fig. 2, a distributed coupling between a single forward propagating mode (see, for example, the first interrogation signal IS-1) and the corresponding (being a reciprocal counterpart) backward propagating mode (e.g., caused by the backscattering, see, for example, the first measurement signal MS-1) is used to obtain the plurality PL-MS of measurement signals.

In other words, in some examples, Fig. 2, a bidirectional transmission channel is used, wherein the interrogation signals IS-1, IS-2, ... are applied to a first end section 1a of the optical fiber 1, and wherein the plurality PL-MS of measurement signals MS-1, MS-2, ... may be obtained after receiving (e.g., at the first end section 1a of the optical fiber 1) and demodulating backscattered signal portions of the interrogation signals IS-1, IS-2, ....

Thus, in some examples, Fig. 2, one or more optical sources 12a for providing the interrogation signals IS-1, IS-2, ... may be arranged at the first end section 1a of the optical fiber 1, and one or more detectors 12b for receiving the plurality PL-MS of measurement signals are also arranged at the first end section 1a of the optical fiber 1.

In some examples (not shown), the one or more optical sources 12a may, e.g., be integrated into the apparatus 100.

In some examples (not shown), the one or more detectors 12b may, e.g., be integrated into the apparatus 100.

In some other examples, however, at least one of the one or more optical sources 12a or the one or more detectors 12b may be arranged outside of the apparatus 100. As an example, in at least some of these embodiments, performing 200 (Fig. 3) the plurality PL-MEAS of measurements may comprise causing, e.g., triggering, by the apparatus 100, the one or more optical sources 12a to transmit the plurality PL-IS of interrogation signals and causing, e.g., triggering, by the apparatus 100, the one or more detectors 12b to receive the plurality PL-MS of measurement signals, e.g., for obtaining the plurality PL-MS of measurement signals by the apparatus. In some examples, similar observations may also apply to at least one of the blocks 210, 212 of Fig. 4.

In some examples, Fig. 2, multiple devices DI-1, DI-2, e.g., instruments, e.g., DAS instruments, may be provided which may comprise one or more optical sources 12a and/or one or more detectors 12b. In some examples, the DAS instruments DI-1, DI-2 may be configured to operate independently, e.g., for performing at least some measurements of the plurality PL-MEAS of measurements. In some examples, a separate processor, e.g., implemented using the apparatus 100 according to some examples, may combine the plurality PL-MEAS of measurements and may process the combined plurality PL-MEAS of measurements, e.g., according to the disclosure.

In some examples, Fig. 2, at least one of the elements 100, 100' (see further below), 12a, 12b may form part of a system or device 10, which, in some examples, may, e.g., be provided at the first end section 1a of the optical fiber 1. In some examples, the device 10 may, e.g., be used as a DAS measuring system.

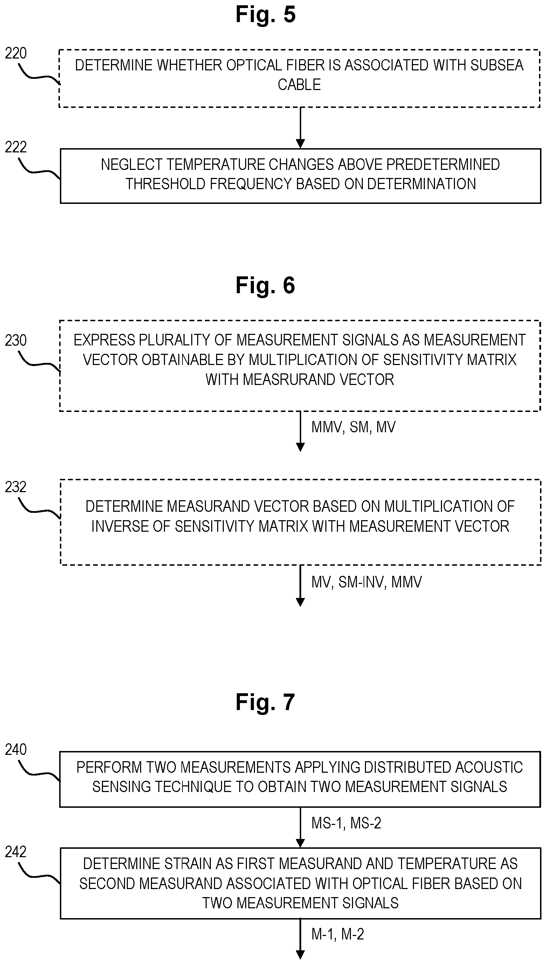

In some examples, Fig. 5, the instructions 106, when executed by the at least one processor 102, cause the apparatus 100 to: neglect 222 temperature changes above a predetermined threshold frequency. In some examples, a-priori knowledge, e.g., about an environment the optical fiber 1 is located in, may be employed, e.g., for discriminating at least one measurand such as, e.g., at least with respect to comparatively high frequency components of the at least one measurand. In some examples, this approach may, e.g., be used for optical fibers associated with a subsea cable. In some examples, Fig. 5, an optional block 220 of determining aspects of an environment of the optical fiber 1 may be provided, e.g., determining whether the optical fiber 1 (Fig. 2) is associated with, e.g., forms part of, a subsea cable (not shown).

In some examples, Fig. 6, the instructions 106, when executed by the at least one processor 102, cause the apparatus 100 to perform at least one of: a) expressing 230 the plurality PL-MS (Fig. 2) of measurement signals as a measurement vector MMV that can be expressed as a multiplication of a sensitivity matrix SM characterizing respective sensitivities of, e.g., K many measurements obtained by DAS measurements at the different optical frequencies to K many measurands constituting elements in a measurand vector MV, or b) determining, e.g., estimating, 232 a or the measurand vector MV characterizing K many measurands based on a multiplication of an inverse SM-INV of a or the sensitivity matrix SM characterizing respective sensitivities of K many measurands for the different optical frequencies with a measurement vector MMV characterizing the plurality PL-MS of measurement signals.

Further details regarding at least some of the elements MMV, SM, MV, SM-INV are presented further below with reference to equations (6), (7).

In some examples, other linear or nonlinear methods may be used to determine and discriminate one or more of the K many measurements.

In some examples, at least one technique based on artificial intelligence, e.g., machine learning, such as, e.g., one or more neural networks, may be used, e.g., to determine one or more of the K many measurands, e.g., based on at least some components of the measurement vector.

In some examples, Fig. 7, the instructions 106, when executed by the at least one processor 102, cause the apparatus 100 to: perform 240 two measurements applying the distributed acoustic sensing, DAS, technique to the optical fiber 1 (Fig. 2) to obtain two measurement signals MS-1, MS-2, each of the two measurements using a different optical frequency and a single spatial fiber mode of the optical fiber 1, determine 242 a strain, as a first measurand M-1, and a temperature, as a second measurand M-2 associated with the optical fiber 1 based on the two measurement signals MS-1, MS-2. Further details regarding the determining block 242 according to some examples are presented further below with reference to, e.g., equation (8).

In some examples, the plurality, e.g., multiple, of measurands M-1, M-2, ... may, e.g., be at least one of: a) temperature and pressure, or b) temperature, strain, and pressure, or c) one or more other measurands that modulate a fiber strain, e.g., together with either temperature or pressure, or d) one or more other measurands that modulate the refractive index of the optical fiber 1.

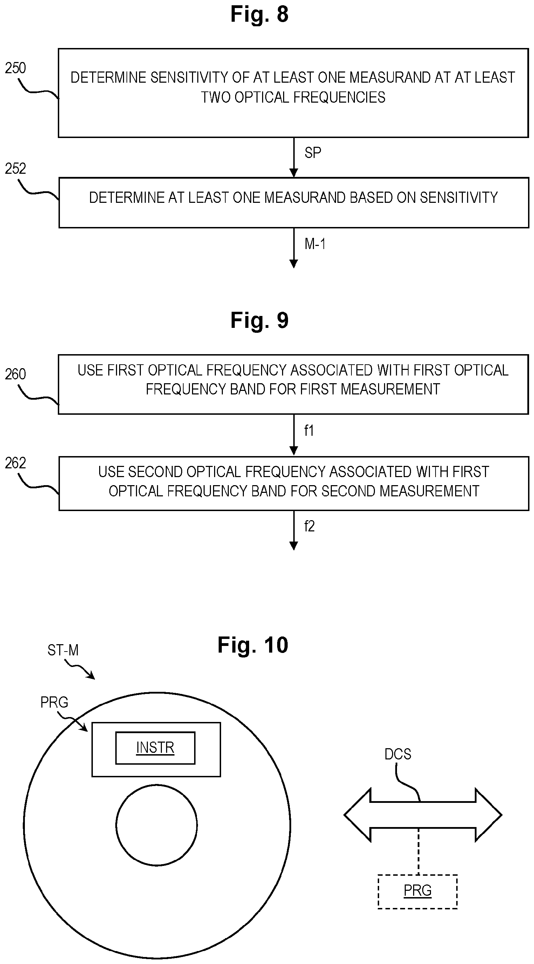

In some examples, Fig. 8, the instructions 106, when executed by the at least one processor 102, cause the apparatus 100 to: determine 250 a sensitivity SP of the at least one measurand M-1 (e.g., pressure) at at least two optical frequencies, e.g., based on a linearization with respect to a predetermined optical reference frequency, determine 252 the at least one measurand M-1 based on the sensitivity SP, e.g., using a plurality of DAS measurements, e.g., at multiple different optical frequencies.

In some examples, determining 250 the sensitivity may comprise reading or retrieving the sensitivity, e.g., from a memory, e.g., a memory for storing configuration information.

In some examples, Fig. 9, the instructions 106, when executed by the at least one processor 102, cause the apparatus 100 to: use 260, for a first measurement of the plurality of measurements, a first optical frequency f1 associated with a first optical frequency band, use 262, for a second measurement of the plurality of measurements, a second optical frequency f2 associated with the first, e.g., same, optical frequency band. In some examples, the first optical frequency band is the C-band or the L-band. In other words, in some examples, at least two measurements may use different frequencies f1, f2 within a same optical band, such as, e.g., the L-band or the C-band or another optical band.

In some examples, the instructions 106, when executed by the at least one processor 102, cause the apparatus 100 to: use, for a first measurement of the plurality PL-MEAS of measurements, a first optical frequency f1 associated with a C-band, use for a second measurement of the plurality of measurements, a second optical frequency f2 associated with an L-band.

Some examples, Fig. 1B, relate to an apparatus 100' for processing data associated with at least one optical fiber 1, the apparatus 100' comprising means 102' for: performing 200 (Fig. 3) a plurality PL-MEAS of measurements applying a distributed acoustic sensing, DAS, technique to the optical fiber 1 to obtain a plurality of measurement signals, each of the plurality of measurements using a different optical frequency and a single spatial fiber mode of the optical fiber, determining 202 at least one measurand of a plurality of measurands associated with the optical fiber based on the plurality of measurement signals.

In some examples, Fig. 1B, the means 102' for performing 200 the plurality of measurements and determining 202 the at least one measurand may, e.g., comprise at least one processor 102 (see, for example, Fig. 1A), and at least one memory 104 storing instructions 106 that, when executed by the at least one processor 102, cause the apparatus 100' to perform at least one of the aforementioned aspects of performing 200 the plurality of measurements and determining 202 the at least one measurand.

In some examples, Fig. 1B, the means 102' for performing 200 the plurality of measurements and determining 202 the at least one measurand may, e.g., comprise circuitry 104' configured to perform at least one of the aforementioned aspects of performing 200 the plurality of measurements and determining 202 the at least one measurand.

Some examples, Fig. 2, relate to a system 10 comprising at least one apparatus 100, 100' according to the disclosure.

In some examples, Fig. 2, the system 10 may, e.g., comprise at least one of the one or more optical sources 12a or the one or more detectors 12b.

Some examples, Fig. 3, relate to a method, e.g., a computer-implemented method, for processing data associated with at least one optical fiber 1, comprising: performing 200 a plurality PL-MEAS of measurements applying a distributed acoustic sensing, DAS, technique to the optical fiber 1 to obtain a plurality of measurement signals, each of the plurality of measurements using a different optical frequency and a single spatial fiber mode of the optical fiber, determining 202 at least one measurand of a plurality of measurands associated with the optical fiber 1 based on the plurality of measurement signals.

Some examples, Fig. 10, relate to a computer program PRG comprising instructions INSTR which, when executed by an apparatus 100, 100', cause the apparatus 100, 100' to perform the method according to the disclosure.

Some examples, Fig. 10, relate to a computer-readable storage medium ST-M, for example a non-transitory computer-readable storage medium, comprising the computer program PRG according to the disclosure.

Some examples, Fig. 10, relate to a data carrier signal DCS carrying and/or characterizing the computer program PRG according to the disclosure.

In the following, further aspects and examples are disclosed, which, in some examples, may be combined with at least one of the aspects and/or examples disclosed above.

As mentioned above, in some examples, Fig. 2, for performing a measurement, e.g., using a DAS technique, an interrogation signal, e.g., the first interrogation signal IS-1, may be applied to, e.g., transmitted via, the optical fiber 1a, e.g., by at least one of the apparatuses 100, 100' or the system 10 or a component 12a thereof, and a backscattered portion of the first interrogation signal IS-1 may be received and, e.g., demodulated to provide the first measurement signal MS-1.

In some examples, changes in a relative phase of the first measurement signal MS-1, e.g., with respect to the first interrogation signal IS-1, may be evaluated, e.g., for determining 202 (Fig. 3) the at least one measurand M-1.

In some examples, Fig. 2, a phase delay of the backscattered light MS-1 from a position with return delay $\tau$ may be expressed as $\phi(\tau) + \phi_0(\tau)$, where $\phi_0(\tau)$ is a backscattered phase at a reference instance, e.g., at a time when a DAS measurement, e.g., DAS recording, started.

In some examples, a DAS measurement may, e.g., comprise the transmission of the first interrogation signal IS-1 via the optical fiber 1 (see, for example, block 210 of Fig. 4) and receiving the first measurement signal MS-1, e.g., in response to the transmission 210 (see, for example, block 212 of Fig. 4). In some examples, a DAS measurement may comprise a transmission of a plurality PL-IS of interrogation signals at different optical frequencies, e.g., as mentioned above, receiving backscattered signal portions of the interrogation signals and demodulation of the backscattered signal portions, thus, e.g., obtaining a respective plurality PL-MS of measurement signals.

In some examples, a DAS measurement may, e.g., provide information about a differential of a phase change, e.g., since a reference instance versus return delay, $d(\tau) = d\phi/d\tau$.

In some examples, the differential phase change $d(\tau)$ may depend on a linear combination of a strain change $\varepsilon(\tau)$ and a relative refractive index change $\Delta n(\tau)/n$, e.g., as seen from a reference state of the optical fiber 1. In some examples, the linear combination may be characterized by

$$d(\tau) = \frac{d\phi}{d\tau} = 4\pi\nu\left(\varepsilon(\tau) + \frac{\Delta n(\tau)}{n}\right) \qquad \text{(equation 1)},$$

wherein v is an optical frequency of an interrogation signal, e.g., the first interrogation signal IS-1.

In some examples, the refractive index change $\Delta n(\tau)/n$ may, e.g., depend on at least one of: a) a strain $\varepsilon(\tau)$, or b) a temperature change $\Delta T(\tau)$, or c) a pressure change $\Delta P(\tau)$, e.g., as applied to the optical fiber 1, e.g., after the reference instance, e.g., through thermo-optic, strain-optic, and pressure-optic coefficients $\zeta_T$, $\zeta_\varepsilon$, and $\zeta_P$, respectively, as may, e.g., be characterized by:

$$\frac{\Delta n(\tau)}{n} = \xi_\varepsilon\,\varepsilon(\tau) + \xi_T\,\Delta T(\tau) + \xi_P\,\Delta P(\tau) \qquad \text{(equation 2)}.$$

In some examples, a sensitivity, e.g., DAS sensitivity, e.g., with respect to temperature and strain, can thus be expressed as

$$d(\tau) = s_\varepsilon\,\varepsilon(\tau) \;+\; s_T\Delta T(\tau) + s_P\Delta P(\tau) \qquad \text{(equation 3)},$$

with the sensitivities

$$s_\varepsilon = 4\pi\nu\,(1 + \xi_\varepsilon) \;,\qquad s_T = 4\pi\nu\,\xi_T \;,\qquad s_P = 4\pi\nu\,\xi_P \qquad \text{(eq. 4)}.$$

In some examples, values for the strain-optic, thermo-optic and pressure-optic coefficients may, e.g., be $\zeta_\varepsilon \approx$ -0.22, $\zeta_T \gg 5.5 \cdot 10^{-6}/K$, and $\zeta_P \approx 0.45 \cdot 10^{-6}/bar$. Note that in some examples, as presently presented, the coefficients $\zeta_T$ and $\zeta_P$ are defined for an axially constrained case where the fiber strain is kept constant.

As already mentioned above, with some conventional approaches using a DAS technique, it is not possible to determine, e.g., discriminate, if a measured signal $d(\tau)$ is caused by strain, temperature, or pressure.

In some examples, it can be known that, e.g., a pressure contribution to the signal $d(\tau)$ is negligible, for example if the optical fiber 1 (Fig. 2) is enclosed in a partly air-filled metal tube, as may be the case in subsea telecom cables according to some examples.

In some examples, see Fig. 5, e.g., at comparatively high frequencies, e.g., above 0.03 Hz to 3 Hz, e.g., for subsea telecom cables, it can be assumed that temperature changes are negligible.

In some examples, Fig. 2, the optical fiber 1 may be axially non-constrained (e.g., free to expand in length), in which case the only strain present may, e.g., be due to thermal and pressure expansion coefficients $E_T$ and $E_P$, respectively.

In some examples, the thermal expansion coefficient $E_T$ is usually positive and is comparatively low for silica fibers, e.g., around $0.5 \cdot 10^{-6}/K$.

In some examples, the pressure expansion coefficient $E_P$ may, e.g., be in the order of $-10^{-6}/bar$, e.g., dependent on a composition and/or thickness of a coating (not shown) of the optical fiber 1.

In some examples, e.g., in an axially non-constrained case, the strain can, e.g., be ignored, e.g., by introducing modified temperature and pressure sensitivities of the free fiber:

$$s_T' = s_T + s_\varepsilon E_T \;,\qquad s_P' = s_P + s_\varepsilon E_P \qquad \text{(equation 5)}.$$

In some examples, thus, at least one of a plurality of, e.g., three, measurands, e.g., strain, temperature, pressure, may be measured with comparatively low crosstalk errors, e.g., from other measurands, e.g., from the two other measurands.

In some examples, pressure and temperature may be measured with comparatively low crosstalk from strain on a free fiber at comparatively high and low frequencies, respectively.

In some examples, e.g., similarly, strain and temperature may be measured with comparatively low crosstalk, e.g., from pressure, e.g., at comparatively high and/or low frequencies, respectively, e.g., on optical fibers that are not exposed to comparatively large pressure signals.

In some conventional approaches using a DAS technique, it may not be possible to discriminate between measurands associated with an optical fiber by frequency discrimination, as explained above.

Therefore, other methods are desirable to discriminate between two or more measurands that may be modulating measurement signals MS-1, MS-2, ..., e.g., as can be obtained by applying a DAS technique, e.g., according to the disclosure.

To achieve such discrimination, in some examples, it is proposed to measure a DAS response with a multiple of optical interrogation frequencies (see, for example, block 200 of Fig. 2 or blocks 210, 212 of Fig. 4), and to exploit a difference in the optical frequency dependence of the sensitivities to discriminate the measurands.

In some examples, the fact that a respective chromatic dispersion of the sensitivities of the refractive index (e.g., as characterized by the coefficients $\zeta_\varepsilon$, $\zeta_T$ and $\zeta_P$, etc.) differs between different measurands may be used for discriminating the different measurands.

In some examples, Fig. 2, the plurality PL-IS of interrogation signals, each having a specific optical frequency, may be multiplexed into the optical fiber 1, which, in some examples, may, e.g., be a common sensor fiber (e.g., transmitting all of the different interrogation signals IS-1, IS-2, ... at their respective optical frequencies into the same optical fiber 1).

As an example, the optical fiber 1 of Fig. 2 may, e.g., be provided as a sensor fiber in a subsea telecommunication cable (not shown) comprising one or more further optical fibers and/or other components.

In some examples, e.g., if K many measurands $m_k(\tau)$, $k = [1, 2, ..., K]$ are measured, e.g., with N many interrogation signals (e.g., using one or more DAS instruments, see, e.g., block 10 of Fig. 2), e.g., at N many different optical frequencies $v_n$, $n = [1, 2, ..., N]$, e.g., producing N many spatially differentiated phase signals $d_{vn}(\tau)$, it can be written:

$$D(\tau) = \begin{bmatrix} d_{v1}(\tau) \\ \vdots \\ d_{vN}(\tau) \end{bmatrix} = \begin{bmatrix} s_{1,v1} & & s_{K,v1} \\ & \ddots & \\ s_{1,vN} & & s_{K,vN} \end{bmatrix} \begin{bmatrix} m_1(\tau) \\ \vdots \\ m_K(\tau) \end{bmatrix} = \mathbf{S}\, M(\tau) \qquad \text{(equation 6)},$$

wherein, for example, D(i) characterizes the measurement vector MMV, see for example, Fig. 6, wherein, for example

matrix $\mathbf{S} = \begin{bmatrix} s_{1,v1} & & s_{K,v1} \\ & \ddots & \\ s_{1,vN} & & s_{K,vN} \end{bmatrix}$ is the sensitivity matrix SM of Fig. 6, wherein, for example, vector

$M(\tau) = \begin{bmatrix} m_1(\tau) \\ \vdots \\ m_K(\tau) \end{bmatrix}$ is the measurand vector MV of Fig. 6.

In some examples, e.g., if the sensitivity matrix $\mathbf{S}$ is invertible, the measurand vector $M(\tau)$ can be determined by applying the inverse sensitivity matrix $\mathbf{S}^{-1}$ to the measurement vector $D(\tau)$:

$$M(\tau) = \mathbf{S}^{-1}\, D(\tau) \qquad \text{(equation 7)}.$$

Thus, in some examples, using equation 7, the components of $d(\tau)$ may be discriminated, so that, e.g., each component of the measurand vector $\boldsymbol{M(\tau)}$ can be determined, e.g., measured, e.g., with suppressed crosstalk from the other components.

In some examples, requirements for the sensitivity matrix $\mathbf{S}$ to be invertible are that N=K (e.g., S is a square matrix) and that the determinant $|\mathbf{S}|$ is not zero.

In some examples, e.g., if N < K, the inverse matrix $\mathbf{S}^{-1}$ may, e.g., be replaced with a pseudo inverse matrix $(\mathbf{S}^T \mathbf{S})^{-1} \mathbf{S}^T$, e.g., to provide a least square error solution.

In some examples, the principle according to the disclosure may be used to discriminate strain as a first measurand $m_1 = \varepsilon$ and temperature as a second measurand $m_2 = \Delta T$, e.g., using two interrogation signals IS-1, IS-2 with respective optical frequencies $v_1$ and $v_2$ (e.g., at least similar to blocks 260, 262 of Fig. 9), wherein, for example the optical frequencies $v_1$ and $v_2$ are, e.g., well, separated, e.g., within the C and L telecommunication bands, for example $v_1 = 190$ THz and $v_2 = 195.1$ THz. In some examples, from equation 7, it can then be obtained:

$$e(\tau) \quad = \frac{s_{T,v2}\, d_{v1}(\tau) - s_{T,v1}\, d_{v2}(\tau)}{s_{\varepsilon,v1}\, s_{T,v2} - s_{\varepsilon,v2}\, s_{T,v1}}$$

$$\Delta T(\tau) = \frac{-s_{\varepsilon,v2}\, d_{v1}(\tau) + s_{\varepsilon,v1}\, d_{v2}(\tau)}{s_{\varepsilon,v1}\, s_{T,v2} - s_{\varepsilon,v2}\, s_{T,v1}} \quad , \qquad \text{(equation 8)},$$

where $s_\varepsilon,v_1$ and $s_\varepsilon,v_2$ are the strain sensitivities and $s_T,v_1$ and $s_T,v_2$ the temperature sensitivities of the measurement signals, e.g., DAS responses, e.g., at frequencies $v_1$ and $v_2$, respectively. In some examples, the denominator in equation 8 equals the determinant $|\mathbf{S}|$ of the sensitivity matrix $\mathbf{S}$.

In some examples, from equation 8, it can be seen that measurement errors in $d_{v1}(\tau)$ and $d_{v2}(\tau)$ are scaled by the ratio of the individual sensitivities to the determinant. In some examples, e.g., to minimize noise magnification through such scaling, it may be desirable that the sensitivity ratios $r_1 = s_T,v_1/s_\varepsilon,v_1$ and $r_2 = s_T,v_2/s_\varepsilon,v_2$ deviate, e.g., significantly from each other.

In some examples, a similar approach as explained above with respect to equation 8 for the measurands strain and temperature may be used to discriminate pressure and temperature, e.g., in an axially non-constrained optical fiber, e.g., replacing the sensitivities in eq. (8) with the wavelength or frequency dependent modified sensitivities to pressure and temperature, e.g., corresponding to equation 5.

In some examples, the principle according to the disclosure may, e.g., be used to discriminate both strain, pressure and temperature, e.g., using the generalized formulas of equations (6) and (7).

As mentioned above, in some examples, a requirement for the determinant $|\mathbf{S}|$ to be nonzero is that a chromatic dispersion of the sensitivities of the refractive index differs between the measurands to be discriminated.

In some further examples, the dispersion of at least one of the strain-optic, thermo-optic and pressure-optic coefficients can be linearized, e.g., around a center frequency $v_0$, as follows:

$$\xi_\varepsilon = \xi_{\varepsilon,0}(1 + (v - v_0)\,b_\varepsilon)$$

$$\xi_T = \xi_{T,0}(1 + (v - v_0)b_T)$$

$$\xi_P = \xi_{P,0}(1 + (v - v_0)b_P) \qquad \text{(equation 9)},$$

where $b_\varepsilon$, $b_T$ and $b_P$ are normalized dispersion coefficients.

In some examples, corresponding expressions for the sensitivities according to eq. (4) are then:

$$s_e = 4\pi v \left(1 + \xi_{\varepsilon,0}\right)\left(1 + (v - v_0)k_\varepsilon\right)$$

$$s_T = 4\pi v\,\xi_{T,0} \qquad (1 + (v - v_0)k_T)$$

$$s_P = 4\pi v\,\xi_{P,0} \qquad (1 + (v - v_0)k_P) \;, \quad \text{(equation 10)},$$

with normalized dispersion coefficients of the sensitivities given by

$$k_\varepsilon = b_\varepsilon\,\xi_{\varepsilon,0}/(1 + \xi_{\varepsilon,0}) \;,$$

$$k_T = b_T \;,$$

and

$$k_P = b_P \;.$$

In some examples, the principle according to the disclosure can, e.g., be used for monitoring of subsea cables, e.g., subsea electrical power cables.

In some examples, the principle according to the disclosure can be used to provide and/or improve at least one of the following, e.g., as compared to some conventional approaches, such as e.g. distributed fiber measurement techniques based on Raman or Brillouin back scattering: a) an extended measurement range, or b) (improved) spatial resolution, or c) shorter measurement update times, or d) (improved) temperature resolution, e.g., in addition to measurements of comparatively slow strain changes and acoustic vibrations at higher frequencies, e.g., from external threats such as trawlers, anchors or human tampering.

In some examples, the principle according to the disclosure can be used for integrity monitoring of hydrocarbon production wells or $CO_2$ storage wells.

In some examples, the principle according to the disclosure can be used for separation of seabed strain and temperature, e.g., for oceanographic and/or climate research.

**Claims**

1. An apparatus (100) for processing data associated with an optical fiber (1), the apparatus (100) comprising at least one processor (102), and at least one memory (104) storing instructions (106) that, when executed by the at least one processor (102), cause the apparatus (100) to:

    perform (200) a plurality (PL-MEAS) of measurements applying a distributed acoustic sensing, DAS, technique to the optical fiber (1) to obtain a plurality (PL-MS) of measurement signals (MS-1, MS-2, ...), each of the plurality (PL-MEAS) of measurements using a different optical frequency and a single spatial fiber mode of the optical fiber (1), and
    determine (202) at least one measurand (M-1) of a plurality (PL-M) of measurands (M-1, M-2, ...) associated with the optical fiber (1) based on the plurality (PL-MS) of measurement signals (MS-1, MS-2, ...).

2. The apparatus (100) according to claim 1, wherein at least some measurements of the plurality (PL-MEAS) of measurements use a same spatial fiber mode of the optical fiber (1).

3. The apparatus (100) according to claim 1 or 2, wherein a first measurand (M-1) of the plurality (PL-M) of measurands is one of the following elements: a) temperature, or b) strain, or c) pressure, or d) another measurand that modulates a fiber strain and/or refractive index of the optical fiber (10), and wherein a second measurand (M-2) of the plurality (PL-M) of measurands is another one of the elements: a) temperature, or b) strain, or c) pressure, or d) another measurand that modulates a fiber strain and/or refractive index of the optical fiber (10).

4. The apparatus (100) according to any of the preceding claims, wherein the instructions (106), when executed by the at least one processor (102), cause the apparatus (100) to discriminate (204) at least two measurands (M-1, M-2) of the plurality (PL-M) of measurands associated with the optical fiber (1) based on the plurality (PL-MS) of measurement signals (MS-1, MS-2, ...).

5. The apparatus (100) according to claim 3, wherein discriminating (204) the at least two measurands (M-1, M-2) comprises exploiting a difference in an optical frequency dependence of respective sensitivities associated with the at least two measurands (M-1, M-2).

6. The apparatus (100) according to any of the preceding claims, wherein the instructions (106), when executed by the at least one processor (102), cause the apparatus (100) to: apply (210) a plurality (PL-IS) of interrogation signals (IS-1, IS-2, ...) at the different optical frequencies to the optical fiber (1), determine (212) the plurality (PL-MS) of measurement signals (MS-1, MS-2, ...) in response to applying (210) the plurality (PL-IS) of interrogation signals (IS-1, IS-2, ...) to the optical fiber (1) by receiving signals from the optical fiber (1) at the different optical frequencies and by demodulating the signals received from the optical fiber (1) at the different optical frequencies to obtain the plurality (PL-MS) of measurement signals (MS-1, MS-2, ...).

7. The apparatus (100) according to any of the preceding claims, wherein the instructions (106), when executed by the at least one processor (102), cause the apparatus (100) to: neglect (222) temperature changes above a predetermined threshold frequency

8. The apparatus (100) according to any of the preceding claims, wherein the instructions (106), when executed by the at least one processor (102), cause the apparatus (100) to perform at least one of: a) express (230) the plurality (PL-MS) of measurement signals (MS-1, MS-2, ...) as a measurement vector (MMV) that can be obtained by or expressed as a multiplication of a sensitivity matrix (SM) characterizing respective sensitivities to K many measurands for DAS interrogation at the different optical frequencies with a measurand vector (MV) characterizing the K many measurands, or b) estimate (232) a or the measurand vector (MV) characterizing K many measurands based on a multiplication of an inverse (SM-INV) of a or the sensitivity matrix (SM) characterizing respective sensitivities of K many measurands for the different optical frequencies with a measurement vector (MMV) characterizing the plurality (PL-MS) of measurement signals (MS-1, MS-2, ...).

9. The apparatus (100) according to any of the preceding claims, wherein the instructions (106), when executed by the at least one processor (102), cause the apparatus (100) to: perform (240) two measurements applying the distributed acoustic sensing, DAS, technique to the optical fiber (1) to obtain two measurement signals (MS-1, MS-2), each of the two measurements using a different optical frequency and a single spatial fiber mode of the optical fiber (1), determine (242) a strain, as a first measurand (M-1), and a temperature, as a second measurand (M-2) associated with the optical fiber (1) based on the two measurement signals (MS-1, MS-2).

10. The apparatus (100) according to any of the preceding claims, wherein the instructions (106), when executed by the at least one processor (102), cause the apparatus (100) to: determine (250) a sensitivity (SP) of the at least one measurand (M-1) at at least two optical frequencies, determine (252) the at least one measurand (M-1) based on the sensitivity (SP).

11. The apparatus (100) according to any of the preceding claims, wherein the instructions (106), when executed by the at least one processor (102), cause the apparatus (100) to: use (260), for a first measurement of the plurality (PL-MEAS) of measurements, a first optical frequency (f1) associated with a first optical frequency band, use (262), for a second measurement of the plurality (PL-MEAS) of measurements, a second optical frequency (f2) associated with the first optical frequency band.

12. An apparatus (100') for processing data associated with at least one optical fiber (10), the apparatus (100') comprising means (102') for: performing (200) a plurality (PL-MEAS) of measurements applying a distributed acoustic sensing, DAS, technique to the optical fiber (1) to obtain a plurality (PL-MS) of measurement signals (MS-1, MS-2, ...), each of the plurality (PL-MEAS) of measurements using a different optical frequency and a single spatial fiber mode of the optical fiber (1), determining (202) at least one measurand (M-1) of a plurality (PL-M) of measurands (M-1, M-2, ...) associated with the optical fiber (1) based on the plurality (PL-MS) of measurement signals (MS-1, MS-2, ...).

13. A system (10) comprising at least one apparatus (100; 100') according to at least one of the claims 1 to 12.

14. A method for processing data associated with at least one optical fiber (10), comprising: performing (200) a plurality (PL-MEAS) of measurements applying a distributed acoustic sensing, DAS, technique to the optical fiber (1) to obtain a plurality (PL-MS) of measurement signals (MS-1, MS-2, ...), each of the plurality (PL-MEAS) of measurements using a different optical frequency and a single spatial fiber mode of the optical fiber (1), determining (202) at least one measurand (M-1) of a plurality (PL-M) of measurands (M-1, M-2, ...) associated with the optical fiber (1) based on the plurality (PL-MS) of measurement signals (MS-1, MS-2, ...).

15. A computer program (PRG) comprising instructions (INSTR) which, when executed by an apparatus (100; 100'), cause the apparatus (100; 100') to perform the method according claim 14.

16. A computer-readable storage medium, for example a non-transitory computer-readable storage medium, (ST-M) comprising the computer program (PRG) according to claim 15.

# Fig. 1A

100

102

104

106

# Fig. 1B

100'

102'

104'

# Fig. 2

10

100

12a,
12b

100'

DI-1

DI-2

1a

1

PL-IS

IS-1

IS-2

⋮

MS-1

MS-2

⋮

PL-MS

FL

M-1

M-2

⋮

PL-M

# Fig. 3

200 — PERFORM PLURALITY OF MEASUREMENTS APPLYING DISTRIBUTED ACOUSTIC SENSING TECHNIQUE TO OBTAIN PLURALITY OF MEASUREMENT SIGNALS

↓ PL-MEAS, PL-MS

202 — DETERMINE AT LEAST ONE MEASURAND OF PLURALITY OF MEASURANDS ASSOCIATED WITH OPTICAL FIBER BASED ON PLURALITY OF MEASUREMENT SIGNALS

↓ M-1

204 — DISCRIMINATE AT LEAST TWO MEASURANDS BASED ON PLURALITY OF MEASUREMENT SIGNALS

↓ M-1, M-2

# Fig. 4

210 — APPLY PLURALITY OF INTERROGATION SIGNALS AT DIFFERENT OPTICAL FREQUENCIES TO OPTICAL FIBER

↓ PL-IS

212 — DETERMINE PLURALITY OF MEASUREMENT SIGNALS IN RESPONSE TO APPLYING PLURALITY OF INTERROGATION SIGNALS TO OPTICAL FIBER

↓ PL-MS

# Fig. 5

220 DETERMINE WHETHER OPTICAL FIBER IS ASSOCIATED WITH SUBSEA CABLE

222 NEGLECT TEMPERATURE CHANGES ABOVE PREDETERMINED THRESHOLD FREQUENCY BASED ON DETERMINATION

# Fig. 6

230 EXPRESS PLURALITY OF MEASUREMENT SIGNALS AS MEASUREMENT VECTOR OBTAINABLE BY MULTIPLICATION OF SENSITIVITY MATRIX WITH MEASRURAND VECTOR

MMV, SM, MV

232 DETERMINE MEASURAND VECTOR BASED ON MULTIPLICATION OF INVERSE OF SENSITIVITY MATRIX WITH MEASUREMENT VECTOR

MV, SM-INV, MMV

# Fig. 7

240 PERFORM TWO MEASUREMENTS APPLYING DISTRIBUTED ACOUSTIC SENSING TECHNIQUE TO OBTAIN TWO MEASUREMENT SIGNALS

MS-1, MS-2

242 DETERMINE STRAIN AS FIRST MEASURAND AND TEMPERATURE AS SECOND MEASURAND ASSOCIATED WITH OPTICAL FIBER BASED ON TWO MEASUREMENT SIGNALS

M-1, M-2

# Fig. 8

250 | DETERMINE SENSITIVITY OF AT LEAST ONE MEASURAND AT AT LEAST TWO OPTICAL FREQUENCIES

↓ SP

252 | DETERMINE AT LEAST ONE MEASURAND BASED ON SENSITIVITY

↓ M-1

# Fig. 9

260 | USE FIRST OPTICAL FREQUENCY ASSOCIATED WITH FIRST OPTICAL FREQUENCY BAND FOR FIRST MEASUREMENT

↓ f1

262 | USE SECOND OPTICAL FREQUENCY ASSOCIATED WITH FIRST OPTICAL FREQUENCY BAND FOR SECOND MEASUREMENT

↓ f2

# Fig. 10

ST-M

PRG

INSTR

DCS

PRG

Europäisches
Patentamt

European
Patent Office

Office européen
des brevets

# EUROPEAN SEARCH REPORT

**Application Number**

EP 24 17 4592

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XU M G ET AL: "Discrimination between strain and temperature effects using dual-wavelength fibre grating sensors", ELECTRONICS LETTERS, THE INSTITUTION OF ENGINEERING AND TECHNOLOGY, GB, vol. 30, no. 13, 23 June 1994 (1994-06-23) , pages 1085-1087, XP006000740, ISSN: 0013-5194, DOI: 10.1049/EL:19940746 | 1-6,8-16 | INV. G01H9/00 G01D5/353 G01K11/32 |
| Y | * the whole document * | 7 | |
| X | BRADY G P ET AL: "SIMULTANEOUS MEASUREMENT OF STRAIN AND TEMPERATURE USING THE FIRST-AND SECOND-ORDER DIFFRACTION WAVELENGTHS OF BRAGG GRATINGS", IEE PROCEEDINGS: OPTOELECTRONICS, INSTITUTION OF ELECTRICAL ENGINEERS, STEVENAGE, GB, vol. 144, no. 3, 1 June 1997 (1997-06-01), pages 156-161, XP000730369, ISSN: 1350-2433, DOI: 10.1049/IP-OPT:19971373 | 1-5,8-16 | |
| Y | * Sections 1-5 * | 7 | TECHNICAL FIELDS SEARCHED (IPC) |
| X | US 2024/044676 A1 (HANDEREK VINCENT [GB]) 8 February 2024 (2024-02-08) | 1-6,8-16 | G01H G01D G01W G01K |
| Y | * abstract; figures 1,3 * * paragraphs [0002], [0006], [0007], [0018], [0019], [0054] - [0072] * | 7 | |
| Y | US 2022/123835 A1 (KACZOROWSKI JAKUB [PL] ET AL) 21 April 2022 (2022-04-21) * abstract; figures 1A-D,4 * * paragraph [0084] * | 7 | |

The present search report has been drawn up for all claims

| Place of search | Date of completion of the search | Examiner |
|---|---|---|
| The Hague | 1 October 2024 | de Jong, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 4592

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2024

| Patent document cited in search report | Publication date | Patent family member(s) | | Publication date |
|---|---|---|---|---|
| US 2024044676 A1 | 08-02-2024 | CA | 3100603 A1 | 28-11-2019 |
| | | EP | 3797269 A1 | 31-03-2021 |
| | | US | 2021190550 A1 | 24-06-2021 |
| | | US | 2024044676 A1 | 08-02-2024 |
| | | WO | 2019224511 A1 | 28-11-2019 |
| US 2022123835 A1 | 21-04-2022 | AU | 2020307661 A1 | 20-01-2022 |
| | | CA | 3145173 A1 | 30-12-2020 |
| | | CN | 114303327 A | 08-04-2022 |
| | | EP | 3991324 A1 | 04-05-2022 |
| | | JP | 2022539767 A | 13-09-2022 |
| | | KR | 20220027217 A | 07-03-2022 |
| | | US | 2022123835 A1 | 21-04-2022 |
| | | WO | 2020261207 A1 | 30-12-2020 |

EPO FORM P0459

For more details about this annex : see Official Journal of the European Patent Office, No. 12/82